# EUROPÄISCHE PATENTANMELDUNG

(11) **EP 4 507 134 A2**
(43) Veröffentlichungstag der Anmeldung: **12.02.2025**
(21) Anmeldenummer: 24216060.4
(22) Anmeldetag: 29.09.2023
(51) Int. Cl.: H01R 13/58

(54) **ANSCHLUSSDOSE FÜR MINDESTENS EIN DATENKABEL**

(30) Priorität: 19.12.2022 DE 102022133969
(62) Teilanmeldung aus: 23200854.0
(71) Anmelder: METZ CONNECT TECH GmbH, 78176 Blumberg (DE)
(72) Erfinder: Müller, Hartmut, 78199 Bräunlingen (DE); Nopper, Tobias, 78073 Bad Dürrheim (DE)
(74) Vertreter: Westphal, Mussgnug & Partner Patentanwälte mbB

(57) **Zusammenfassung**

Die vorliegende Erfindung betrifft eine Anschlussdose (1), insbesondere Unterputz- oder Hohlwandanschlussdose, für mindestens ein Datenkabel (60) eines Daten- und/oder Kommunikationsnetzwerks, aufweisend ein Gehäuse (10) mit einer Innenseite (11), einer Außenseite (12), einem Gehäuseunterteil (20) und einem Gehäuseoberteil (50), wobei das Gehäuseoberteil (50) auf das Gehäuseunterteil (20) in einer Gehäusemittelachse (A) aufsetzbar ist, wobei an dem Gehäuseunterteil (20) an einem Gehäuseunterteilboden (24) eine Gehäuseunterteilöffnung (23) und eine Klemmeinrichtung (30) und ein Klemmmittel vorgesehen sind, wobei die Klemmeinrichtung (30) an einer Außenseite (12) des Gehäuseunterteilbodens (24) angeordnet ist und durch das Klemmmittel zum Festklemmen des mindestens eines Datenkabels (60) zwischen zwei Auflageflächen (21, 31, 22, 32) vorgesehen ist, wobei durch die Gehäuseunterteilöffnung (23) das mindestens eine Datenkabel (60) durch den Gehäuseunterteilboden (24) in das Gehäuse (10) hineinragen kann, wobei in dem Gehäuse (10) eine Leiterplatte (52) angeordnet ist, an welcher mindestens eine Steckbuchse (54) zur Aufnahme eines Steckverbinders angeordnet ist, wobei die Klemmeinrichtung (30) durch mindestens eine Schienenführung (25) entlang der Gehäusemittelachse (A) verschiebbar ist.

## Beschreibung

Die vorliegende Erfindung betrifft eine Anschlussdose, insbesondere eine Unterputz- oder Hohlwandanschlussdose für mindestens ein Datenkabel, vorzugsweise ein Datenkabel für ein Daten- oder Kommunikationsnetz, mit den Merkmalen des Patentanspruchs 1.

Anschlussdosen sind aus dem Stand der Technik in unterschiedlichen Ausgestaltungen vorbekannt. Verbreitet sind Anschlussdosen, insbesondere Unterputz- oder Hohlwandanschlussdosen mit einem oder zwei RJ-45-Anschlüssen für Netzwerke nach Cat.6 oder Cat. 7 bekannt.

Beispielsweise ist aus der DE 10 2004 025 188 A1 eine Anschlussdose für ein Daten- oder Kommunikationsnetz vorbekannt, aufweisend ein Gehäuse mit einem Gehäuseoberteil und einem Gehäuseunterteil, wobei an dem Gehäuseunterteil an einer Bodenfläche eine Klemmvorrichtung für ein oder zwei Datenkabel vorgesehen ist. Um das Datenkabel zwischen zwei Auflageflächen an der Anschlussdose festzuklemmen, umfasst die Klemmvorrichtung eine Klappe, die mittels einer Klemmschraube gegen die Bodenfläche gespannt werden kann.

DE 10 2011 011 535 B3 lehrt eine Anschlussdose für ein Daten- oder Kommunikationsnetz, wobei die Klemmvorrichtung mit einem federnden Flügel ausgebildet ist, der zum Fixieren des Datenkabels von vorne durch eine Kopfschraube betätigt werden kann. Jedoch hat sich hier gezeigt, dass das Datenkabel erschwert einführbar ist, da sehr begrenzter Platz für die Einführung des Datenkabels zur Verfügung steht.

Derartige Anschlussdosen haben sich in der Vergangenheit bewährt, jedoch hat es sich gezeigt, dass die Montage des Datenkabels aufwändig ist.

Die vorliegende Erfindung widmet sich daher der Aufgabe, eine verbesserte Anschlussdose vorzuschlagen, die gegenüber den aus dem Stand der Technik bekannten Anschlussdosen zweckmäßigerweise verbessert ist. Insbesondere soll die Anschlussdose eine verbesserte Handhabung beim Anschluss des Datenkabels aufweisen.

Diese Aufgabe wird durch eine Anschlussdose mit den Merkmalen des Patentanspruchs 1 gelöst.

Weitere vorteilhafte Ausgestaltungen der Erfindung werden in den Unteransprüchen angegeben.

Die erfindungsgemäße Anschlussdose, insbesondere Unterputz- oder Hohlwanddose für mindestens ein Datenkabel eines Daten- oder Kommunikationsnetzes mit den Merkmalen des Patentanspruchs 1 weist ein Gehäuse mit einer Innenseite, einer Außenseite, einem Gehäuseunterteil und einem Gehäuseoberteil auf. Das Gehäuseoberteil kann in einer Gehäusemittelachse auf das Gehäuseunterteil aufgesetzt werden. An dem Gehäuseunterteil ist an einem Gehäuseunterteilboden eine Gehäuseunterteilöffnung und eine Klemmeinrichtung mit einem Klemmmittel vorgesehen, wobei die Klemmeinrichtung an der Außenseite des Gehäuseunterteilbodens angeordnet ist und durch das Klemmmittel zum Festklemmen des mindestens einen Datenkabels zwischen zwei Auflageflächen konfiguriert ist und wobei durch die Gehäuseunterteilöffnung das mindestens eine Datenkabel in das Gehäuse durch eine Bodenfläche des Gehäuseunterteils hineinragen kann. In dem Gehäuse ist darüber hinaus eine Leiterplatte angeordnet, an welcher mindestens eine Steckbuchse zur Aufnahme eines Steckverbinders, insbesondere eines Steckverbinders eines Datenkabels, angeordnet ist. Erfindungsgemäß ist dabei vorgesehen, dass die Klemmeinrichtung durch mindestens eine Schienenführung entlang der Gehäusemittelachse verschiebbar ist.

Durch die Schienenführung wird die Klemmeinrichtung entlang der Gehäusemittelachse verschiebbar gelagert gehalten, wodurch das Klemmmittel ohne ein Verkanten in der Gehäusemittelachse zum Verklemmen des mindestens einen Datenkabels bewegt werden kann.

Die Klemmeinrichtung stellt in der Regel eine Zugentlastung des angeschlossenen Datenkabels dar. Ferner können das Gehäuse und/oder die Auflageflächen aus einem elektrisch leitfähigen Werkstoff hergestellt sein, wobei die Klemmeinrichtung nicht nur als Zugentlastung wirken kann, sondern ebenfalls den Schirmübergang zwischen einer Schirmung des Datenkabels und dem Gehäuse bewerkstelligen kann.

Eine bevorzugte Weiterbildung der vorliegenden Erfindung sieht vor, dass das Klemmmittel das Gehäuseunterteil mit der Klemmeinrichtung, bevorzugt dauerhaft, verbindet, und vorzugsweise das Klemmmittel von der Innenseite des Gehäuses betätigbar ist. Der wesentliche Vorteil dieser Weiterbildung kann darin gesehen werden, dass die Montage und insbesondere die Verklemmung des Datenkabels auf der Rückseite des Gehäuses vollständig von der Vorderseite erfolgen kann und es nicht mehr notwendig ist, die Klemmeinrichtung von hinten mit den Fingern gegen das Gehäuseunterteil zu halten und gleichzeitig das Klemmmittel anzuziehen. Durch die näherungsweise lineare Beweglichkeit der Klemmeinrichtung als Ganzes durch mindestens eine Schienenführung entlang der Gehäusemittelachse steht - im Gegensatz zu den aus dem Stand der Technik bekannten Anschlussdosen - mehr Platz für die Einführung des Datenkabels zur Verfügung. Daraus ergibt sich weiterhin eine erhebliche Verbesserung der Handhabung der Anschlussdosen insbesondere beim Einbau der Anschlussdosen als Unterputz- oder Hohlwanddose. Dort ist nämlich der vorhandene Platz sehr begrenzt, und das Andrücken der Klemmeinrichtung von hinten an das Gehäuseunterteil aufgrund der begrenzten Zugänglichkeit sehr mühsam.

Eine Weiterbildung der vorliegenden Erfindung sieht vor, dass das Klemmmittel eine Klemmschraube umfasst, die vorzugsweise parallel, noch weiter bevorzugt koaxial, zu der Gehäusemittelachse angeordnet ist. Die Klemmschraube weist vorzugsweise einen Schraubenkopf und einen Gewindeabschnitt auf, wobei der Gewindeabschnitt mit dem Schraubenkopf verbunden ist und von diesem absteht. Die Klemmschraube bzw. das Klemmmittel ist vorzugsweise von der Innenseite des Gehäuses durch einen korrespondierenden Durchbruch in dem Gehäuseunterteil bzw. Gehäuseunterteilboden mit der Klemmeinrichtung verbunden, wobei vorzugsweise die Klemmeinrichtung ein mit der Klemmschraube korrespondierendes Gewinde aufweist und der Schraubenkopf auf der Innenseite des Gehäuses auf dem Gehäuseunterteilboden in Anschlag kommen kann. Durch ein derart ausgestaltetes Klemmmittel kann die Klemmvorrichtung auf einfache Weise von der Vorderseite des Gehäuses zum Verklemmen des mindestens einen Datenkabels angezogen werden. Zum Öffnen der Klemmeinrichtung wird über die Drehung der Klemmschraube die Klemmeinrichtung in eine Position bewegt, in der das mindestens eine Datenkabel in die Anschlussdosen eingeführt werden kann.

Eine weitere vorteilhafte Ausgestaltung der vorliegenden Erfindung sieht vor, dass das Klemmmittel verliersicher mit der Klemmeinrichtung gekoppelt ist. Beispielsweise kann in dem einfachsten Fall, wenn das Klemmmittel eine Klemmschraube umfasst, die Schraubverbindung zwischen dem Gehäuse bzw. Gehäuseunterteil gegen unerwünschtes Lockern durch eine Verstemmung oder durch Materialauftrag gesichert werden, die bzw. der vorzugsweise im Bereich des Gewindeabschnitts angeordnet ist. Durch diese Sicherung kann erreicht werden, dass beim Öffnen der Klemmeinrichtung eine maximale Öffnungsweite vorgegeben wird und sich die Klemmeinrichtung nicht ungewünscht von der Anschlussdose beim Öffnen lösen kann.

Nach Maßgabe einer weiteren bevorzugten Ausgestaltung der vorliegenden Erfindung ist die Klemmeinrichtung durch die mindestens eine Schienenführung näherungsweise parallel zu dem Gehäuseunterteilboden gehalten und entlang der Gehäusemittelachse verschiebbar. Durch die parallele Ausrichtung zu dem Gehäuseunterteilboden kann insbesondere das Klemmmittel ohne Verkanten betätigt werden, wodurch die Handhabung einer solchen Anschlussdose vereinfacht ist.

Eine Weiterbildung der vorliegenden Erfindung sieht vor, dass die mindestens eine Schienenführung U-förmig ausgebildet ist und zwischen zwei Schenkeln eine Führungsnut für die Klemmeinrichtung entlang der Gehäusemittelachse bereitstellt.

Gemäß einer bevorzugten Weiterbildung der vorliegenden Erfindung bildet die mindestens eine Schienenführung in einer Ebene senkrecht zu der Gehäusemittelachse einen Formschluss mit der Klemmeinrichtung, wodurch die Position der Klemmeinrichtung in der Ebene gegenüber der mindestens einen Schienenführung festgelegt ist. So kann entweder die Schienenführung die Klemmeinrichtung umgreifen oder die Klemmeinrichtung umgreift die Schienenführung. Beispielsweise kann gemäß einer bevorzugten Ausgestaltung die Schienenführung mindestens einen Hinterschneidungsbereich aufweisen in den die Klemmeinrichtung eingreift.

Eine Weiterbildung der vorliegenden Erfindung sieht vor, dass die Schienenführung die Klemmeinrichtung entlang der Gehäusemittelachse über der Gehäuseunterteilöffnung hält, wobei noch weiter bevorzugt die Klemmeinrichtung derart bemessen ist, dass diese die Gehäuseunterteilöffnung abdeckt bzw. in einer Projektion in der Gehäusemittelachse mindestens der Größe der Gehäuseunterteilöffnung entspricht oder vorzugsweise größer ist als die Gehäuseunterteilöffnung ist und die Gehäuseunterteilöffnung vollständig überragt.

Eine weitere Ausführungsform der vorliegenden Erfindung sieht vor, dass die Klemmeinrichtung durch zwei Schienenführungen in der Gehäusemittelachse verschiebbar gelagert gehalten ist. Bevorzugt sind die zwei Schienenführungen auf gegenüberliegenden Seiten der Gehäuseunterteilöffnung angeordnet, wobei die Klemmeinrichtung zwischen den zwei Schienenführungen beweglich gehalten ist. Durch die beiden Schienenführungen auf den gegenüberliegenden Seiten der Gehäuseunterteilöffnung wird die Klemmeinrichtung exakt positioniert über der Gehäuseunterteilöffnung positioniert gehalten.

Eine Weiterbildung der vorliegenden Erfindung sieht vor, dass die mindestens eine Schienenführung eine Verliersicherung umfasst. Durch die Verliersicherung wird sichergestellt, dass die Klemmeinrichtung nicht aus der Schienenführung herausfallen kann und somit verliersicher an dem Gehäuse der Anschlussdose angeordnet ist. Die Verliersicherung kann auf vielfältige Weise bewerkstelligt werden, wobei eine der Möglichkeiten vorsieht, dass die Schienenführung an dem einen freien Ende eine oder mehrere Verstemmungen aufweist.

Eine Weiterbildung der vorliegenden Erfindung sieht vor, dass ein Federmittel vorgesehen ist, dass dem Klemmmittel entgegen wirken kann. Das Federmittel ist folglich darauf ausgelegt, die Klemmeinrichtung von dem Gehäuseunterteil abzudrücken, wodurch sichergestellt werden kann, dass die Klemmeinrichtung immer in der maximalen durch das Klemmmittel definierten Position entlang der Gehäusemittelachse steht. Dadurch soll gewährleistet werden, dass kein Spiel in dem System ist und dass die Klemmeinrichtung bei dem Einführen des Datenkabels in die Anschlussdose durch die Gehäuseunterteilöffnung in der maximal geöffneten Position bleibt. Dadurch soll insbesondere ein Verhaken des Datenkabels bei der Montage mit der Klemmeinrichtung verhindert werden.

Vorzugsweise wird das Federmittel durch eine Druckfeder, insbesondere eine Spiralfeder, gebildet, wobei noch weiter bevorzugt das Federmittel das Klemmmittel entlang der Gehäusemittelachse abschnittsweise umgibt. Das Federmittel und das Klemmmittel sind vorzugsweise koaxial zueinander angeordnet und noch weiter bevorzugt parallel zu der Gehäusemittelachse angeordnet.

Eine Weiterbildung der vorliegenden Erfindung sieht vor, dass eine erste Auflagefläche für das mindestens eine Datenkabel und eine zweite Auflagefläche für das mindestens eine Kabel an dem Gehäuseunterteil angeordnet sind, wobei das mindestens eine Datenkabel wahlweise an der ersten Auflagefläche oder der zweiten Auflagefläche durch die Klemmeinrichtung klemmend fixierbar ist, und wobei die erste Auflagefläche und die zweite Auflagefläche in einem Winkel zueinander angeordnet sind.

Die zwei Auflageflächen ermöglichen einen Kabelabgang in zwei unterschiedlichen Winkeln bezogen auf den Gehäuseunterteilboden des Gehäuseunterteils und damit insbesondere des Gehäuses. Dadurch kann die Anschlussdose in unterschiedlichen Einbausituationen zur Anwendung kommen. Der Anwender kann vor dem Einbau wählen, in welchem Winkel relativ zur Bodenfläche und in welcher Richtung bezogen auf eine gedachte Gehäusemittelachse das Datenkabel angeschlossen werden soll.

Vorzugsweise ist die erste Auflagefläche parallel zu der Bodenfläche des Gehäuseunterteils angeordnet. Auf diese Weise kann ein Kabelabgang in einem Winkel von 90° relativ zur Gehäusemittelachse realisiert werden.

Besonders bevorzugt ist die zweite Auflagefläche gegen die Bodenfläche des Gehäuseunterteils in einem Winkel zwischen 20° und 70°, vorzugsweise in einem Winkel zwischen 40° und 50°, besonders bevorzugt in einem Winkel von etwa 45°, geneigt angeordnet. Eine derartige Anordnung ist insbesondere in Hohlwanddosen von Vorteil, da das Kabel in dem Kabelabgang weniger stark geknickt werden muss.

Eine vorteilhafte Weiterbildung der Erfindung sieht vor, dass die erste Auflagefläche und/oder die zweite Auflagefläche eine Anlagekontur und/oder eine Anlagestruktur aufweisen. Eine Anlagekontur beispielsweise in Form einer Rinne zum Einlegen des Datenkabels kann die Positionierung des Datenkabels auf der entsprechenden Auflagefläche erleichtern. Eine Anlagestruktur beispielsweise in Form von Noppen, Zähnen oder quer zur Längsrichtung des Datenkabels verlaufenden Rippen kann die Fixierung des Kabels verbessern.

Vorzugsweise weist die Klemmeinrichtung ebenfalls eine solche zuvor beschriebene Anlagekontur und/oder eine Anlagestruktur auf. Eine Anlagekontur beispielsweise in Form einer Rinne zum Einlegen des Datenkabels kann die Positionierung des Datenkabels erleichtern. Eine Anlagestruktur beispielsweise in Form von Noppen, Zähnen oder quer zur Längsrichtung des Datenkabels verlaufenden Rippen kann die Fixierung des Datenkabels verbessern.

Gemäß einer Weiterbildung der Erfindung weist die Klemmeinrichtung eine erste Auflagefläche und eine zweite Auflagefläche auf, welche jeweils mit der ersten Auflagefläche und der zweiten Auflagefläche an dem Gehäuseunterteil korrespondieren. Folglich kann das mindestens eine Datenkabel zwischen der ersten Auflagefläche der Klemmeinrichtung und der ersten Auflagefläche an dem Gehäuseunterteil verklebt werden und/oder das mindestens eine Datenkabel kann zwischen der zweiten Auflagefläche der Klemmeinrichtung und der zweite Auflagefläche an dem Gehäuseunterteil verklemmt werden.

Die erste Auflagefläche ist in einem ersten Abschnitt der Klemmeinrichtung angeordnet und die zweite Auflagefläche ist in einem zweiten Abschnitt der Klemmeinrichtung angeordnet. Bevorzugt sind der erste Abschnitt und der zweite Abschnitt in einem Winkel zueinander angeordnet, welcher insbesondere dem Winkel zwischen der ersten Auflagefläche und der zweiten Auflagefläche an dem Gehäuseunterteil entspricht. In dieser Ausgestaltung kann die Klemmvorrichtung zur Fixierung des Kabels an beiden Auflageflächen verwendet werden, ohne dass eine Positionsänderung der Klemmvorrichtung erforderlich ist.

Gemäß einer weiteren bevorzugten Ausgestaltung der vorliegenden Erfindung sind die erste Auflagefläche und die zweite Auflagefläche an den Gehäuseunterteil auf gegenüberliegenden Seiten der Gehäuseunterteilöffnung auf der Außenseite des Gehäuses angeordnet. Bevorzugt sind die erste Auflagefläche und die zweite Auflagefläche auf gegenüberliegenden Seiten der Gehäuseunterteilöffnung entlang einer gedachten Verbindungslinie angeordnet, die eine zweite gedachte Verbindungslinie vorzugsweise im rechten Winkel schneidet, die die mindestens eine Schienenführung und die Gehäusemittelachse verbindet und/oder die zwei Schienenführungen verbindet.

Besonders bevorzugt ist das Gehäuseoberteil auf das Gehäuseunterteil aufsetzbar und an dem Gehäuseunterteil in mindestens vier, vorzugsweise mindestens sechs, besonders bevorzugt in acht, gegeneinander um eine gedachte Gehäusemittelachse gedrehten Stellungen festlegbar, um einen Kabelabgang in eine große Zahl an unterschiedlichen Richtungen zu ermöglichen.

Nachfolgend wird anhand der begleitenden Figuren ein Ausführungsbeispiel einer erfindungsgemäßen Anschlussdose im Detail beschrieben. Es zeigen:
- Figur 1:: eine Draufsicht auf eine Frontseite einer Anschlussdose mit einer Innenseite, einer Außenseite, einem Gehäuseoberteil und einem Gehäuseunterteil,
- Figur 2: eine Seitenansicht der Anschlussdose gemäß Figur 1 mit einer durch ein Klemmmittel betätigbaren Klemmeinrichtung an einem Gehäuseunterteilboden des Gehäuseunterteils,
- Figur 3: eine perspektivische Ansicht eines Gehäuseunterteils einer erfindungsgemäßen Anschlussdose, wobei an dem Gehäuseunterteil die Klemmeinrichtung sich in einer offenen Position befindet, damit mindestens ein Datenkabel in das Gehäuse eingeführt werden kann,
- Figur 4: eine Schnittdarstellung des Gehäuseunterteils gemäß Figur 3,
- Figur 5: eine perspektivische Ansicht des Gehäuseunterteils gemäß Figur 3, wobei die Klemmeinrichtung sich in einer geschlossenen Position befindet, in der das mindestens eine Datenkabel zwischen zwei Auflageflächen geklemmt gehalten werden kann,
- Figur 6: eine Schnittdarstellung des Gehäuseunterteils gemäß Figur 5, und
- Figur 7: eine Draufsicht auf eine Innenseite des Gehäuseunterteils.

Gleiche oder funktional gleiche Teile oder Merkmale werden in der nachfolgenden detaillierten Beschreibung der Figuren mit den gleichen Bezugszeichen gekennzeichnet. Darüber hinaus sind in den Figuren nicht alle gleichen oder funktional gleichen Teile oder Merkmale mit einer Bezugsziffer versehen.

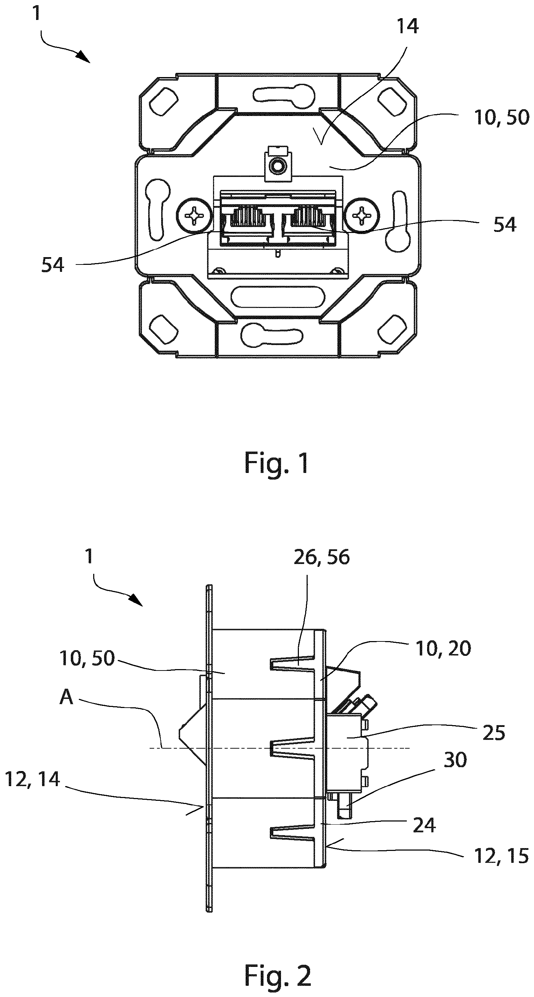

Figur 1 zeigt eine Draufsicht einer Ausführungsform einer Anschlussdose 1, die ein Gehäuse 10 mit einem Gehäuseoberteil 50 und einem Gehäuseunterteil 20 umfasst. Das Gehäuse 10 weist eine Vorderseite 14 und eine Rückseite 15 auf und kann aus einem metallischen Werkstoff hergestellt sein.

Das Gehäuseoberteil 50 und das Gehäuseunterteil 20 weisen eine in den Figuren 1 und 2 durch das Gehäuse 10 verdeckte - und somit nicht dargestellte - Innenseite 11 und eine Außenseite 12 auf. Das Gehäuseoberteil 50 kann auf das Gehäuseunterteil 20 zum Zusammensetzen des Gehäuses 10 in einer Gehäusemittelachse abgeordnet werden.

Das Gehäuseoberteil 50 umfasst die Vorderseite 14 und das Gehäuseunterteil 20 umfasst die Rückseite 15 des Gehäuses 10.

Das Gehäuseoberteil 50 kann vorzugsweise auf das Gehäuseunterteil 20 in mindestens vier, vorzugsweise mindestens sechs, besonders bevorzugt in acht, gegeneinander um die Gehäusemittelachse A gedrehten Stellungen zusammengesteckt werden. Wie aus Figur 2 ersichtlich, können zur vereinfachten Montage das Gehäuseunterteil 20 und/oder Gehäuseoberteil 50 Zähne 26, 56 aufwiesen, die ineinandergreifen können um die Stellungen vorzugeben, in der das Gehäuseoberteil 50 und das Gehäuseunterteil 20 zusammengesteckt werden können.

In dem Gehäuse 10 ist eine - nicht dargestellte - Leiterplatte angeordnet, an welcher mindestens eine Steckbuchse 54 - hier im Ausführungsbeispiel zwei Steckbuchsen 54 zur Aufnahme eines nicht dargestellten Steckverbinders auf der Vorderseite 14 - angeordnet ist.

Der Steckverbinder kann beispielsweise ein RJ45-Steckverbinder sein.

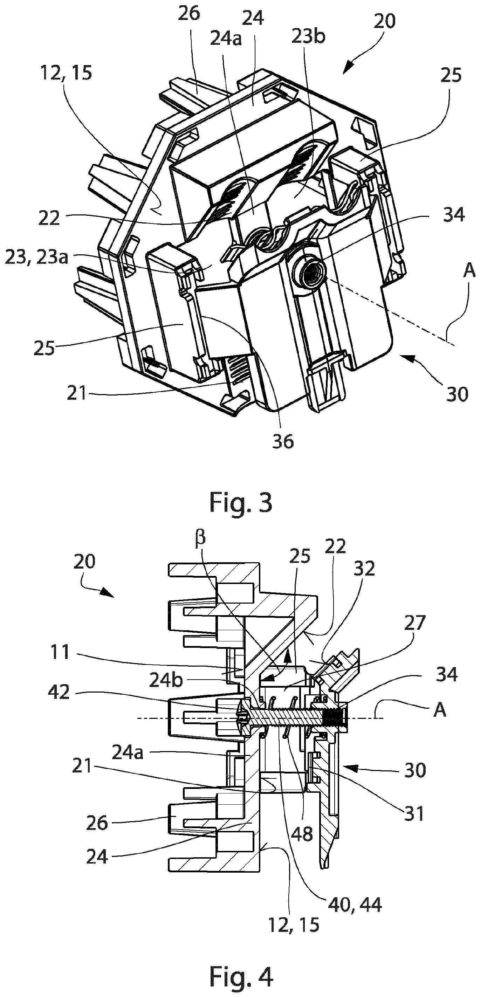

Das Gehäuseunterteil 20 ist detailliert in den Figuren 3 bis 7 dargestellt und weist einen Gehäuseunterteilboden 24 auf, der die Rückseite 15 des Gehäuses 10 bildet.

Darüber hinaus weist das Gehäuseunterteil 20 eine als Ganzes bezeichnete Gehäuseunterteilöffnung 23 auf, durch die mindestens ein (nicht dargestelltes) Datenkabel 60 durch den Gehäuseunterteilboden 24 in das Gehäuse 10 hineinragen kann. Die Gehäuseunterteilöffnung 23 durchbricht demnach das Gehäuseunterteil 20 und verbindet die Innenseite 11 des Gehäuses 10 mit der Außenseite 12 des Gehäuses 10.

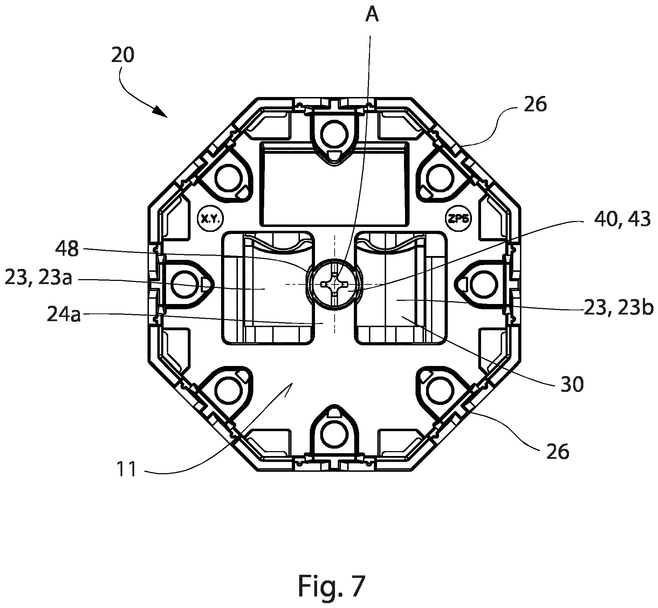

Die Gehäuseunterteilöffnung 23 kann - wie insbesondere der Figur 7 entnommen werden kann - zweiteilig ausgebildet sein und einen ersten Abschnitt 23a und einen zweiten Abschnitt 23b umfassen, die durch einen Steg 24a beabstandet zueinander in dem Gehäuseunterteilboden 24 angeordnet sind.

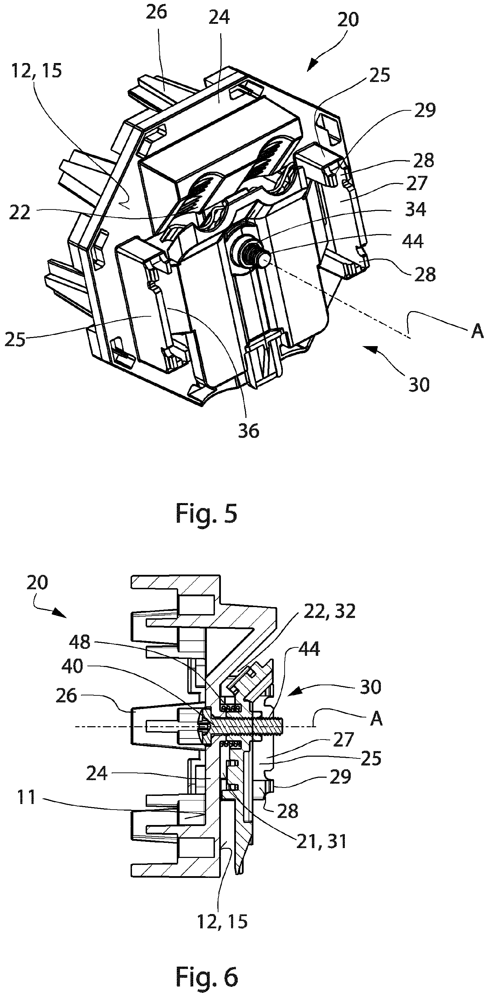

Darüber hinaus sind an dem Gehäuseunterteil 20 eine Klemmeinrichtung 30 und ein Klemmmittel vorgesehen, wobei die Klemmeinrichtung 30 an einer Außenseite 12 bzw. der Rückseite 15 des Gehäuses 10 angeordnet ist und durch das Klemmmittel zum Festklemmen des mindestens eines Datenkabels 60 zwischen einer offenen Stellung gemäß den Figuren 3 und 4 und einer geschlossenen Stellung gemäß den Figuren 5 und 6 bewegt werden kann.

In der geschlossenen Stellung gemäß den Figuren 5 und 6 kann das mindestens eine - aus Vereinfachungsgründen nicht dargestellte - Datenkabel 60 eingeklemmt werden.

Die Klemmeinrichtung 30 realisiert in der Regel eine Zugentlastung des angeschlossenen Datenkabels und kann ebenfalls einen Schirmübergang zwischen Anschlussdose 1 und einer Schirmung des Datenkabels 60 bilden.

Die Klemmeinrichtung 30 wird durch mindestens eine Schienenführung 25 entlang der Gehäusemittelachse A beweglich gelagert gehalten, wobei die Schienenführung 25 auf der Rückseite 15 des Gehäuses 10 benachbart zu der Gehäuseunterteilöffnung 23 angeordnet ist und von der Rückseite 15 parallel zu der Gehäusemittelachse A des Gehäuses 10 absteht.

In dem dargestellten Ausführungsbeispiel gemäß den Figuren 3-6 weist die Anschlussdose 1 zwei Schienenführungen 25 auf, die auf gegenüberliegenden Seiten der Gehäuseunterteilöffnung 23 angeordnet sind. Die Klemmeinrichtung 30 wird zwischen den zwei Schienenführungen 25 gehalten.

Die jeweilige Schienenführung 25 steht, bevorzugt unmittelbar, benachbart zu der Gehäuseunterteilöffnung 23 von der Rückseite 15 des Gehäuses 10 ab.

Die jeweilige Schienenführung 25 ist in dem dargestellten und beispielhaften Ausführungsbeispiel nach Art eines U-förmigen Profils mit zwei Schenkeln ausgebildet, zwischen denen eine Führungsnut 27 für die Klemmeinrichtung 30 gebildet ist.

Die Schienenführung 25 weist an jedem der Schenkel einen Hinterschneidungsbereich 28 auf, der eingerichtet ist, mit der Klemmeinrichtung 30 ein Formschluss in einer Ebene senkrecht zu der Gehäusemittelachse A zu bilden. In die Führungsnut 27 und/oder in den Hinterschneidungsbereich 28 greift eine korrespondierend ausgebildete Führung 36 ein. Die Führung 36 kann wie dargestellt T-förmig sein.

Die Klemmeinrichtung 30 kann U-förmig sein, wobei die Führungen 36 kufenartig abstehen. Die Klemmeinrichtung 30 der Klemmeinrichtung 30 entspricht bevorzugt der Länge der Schienenführung 25 in der Gehäusemittelachse A, woraus sich eine geringe Bautiefe der Anschlussdose 1 ergibt.

An dem freien Ende der Schienenführung 25 kann eine Verliersicherung 29 vorgesehen sein, durch die die Klemmeinrichtung 30 verliersicher in der Schienenführung 25 gehalten werden kann.

In dem Ausführungsbeispiel gemäß den Figuren 2 bis 6 ist ersichtlich, dass die Schienenführung 25 an einem freien und von der Rückseite 15 des Gehäuses 10 abgewandten Ende mehrere Fortsätze aufweist, die beispielsweise durch Verstemmen über der Führungsnut 27 und/oder den Hinterschneidungsbereich 28 der Schienenführung 25 in Position gebracht werden können, um die Verliersicherung 29 zu bilden.

Die Schienenführung 25 positioniert die Klemmeinrichtung 30 über der Gehäuseunterteilöffnung 23, wobei bevorzugt die Klemmeinrichtung 30 derart bemessen ist, dass diese die Gehäuseunterteilöffnung 23 vollständig verdeckt.

Weiter ist unter Bezugnahme auf die Figuren 4 und 6 ersichtlich, dass das Klemmmittel als Klemmschraube 40 ausgebildet ist, die das Gehäuseunterteil 20 mit der Klemmeinrichtung 30 verbindet. Die Klemmschraube 40 ist parallel zu der Gehäusemittelachse A und vorzugsweise koaxial zu der Gehäusemittelachse A angeordnet.

Ferner ist es bevorzugt, dass die Klemmschraube 40 auf einer gedachten Verbindungslinie zwischen den zwei Schienenführungen 25 - vorzugsweise mittig - angeordnet ist, wobei die gedachte Verbindungslinie die jeweilige Schienenführung 25 bevorzugt mittig schneidet.

Die Klemmschraube 40 ist vorzugsweise eine Kopfschraube und umfasst einen Schraubenkopf 42 und einen Gewindeabschnitt 44, wobei der Gewindeabschnitt 44 mit dem Schraubenkopf 42 verbunden ist und von diesem absteht. Der Schraubenkopf 42 ist in dem Gehäuse 10 angeordnet und kann an der Innenseite 11 des Gehäuses 10 bzw. des Gehäuseunterteils 20 anliegen. Der Gewindeabschnitt 44 ragt aus dem Gehäuse 10.

Die Klemmschraube 40 ist - wie in Figur 7 in der Draufsicht auf die Innenseite 11 des Gehäuseunterteils 20 gezeigt ist - von der Innenseite 11 des Gehäuses 10 durch einen korrespondierenden Durchbruch 24b in dem Steg 24a in dem Gehäuseunterteilboden 24 mit der Klemmeinrichtung 30 verbunden, wobei vorzugsweise die Klemmeinrichtung 30 ein mit der Klemmschraube 40 korrespondierendes Gewinde 34 aufweist

Die Klemmschraube 40 kann verliersicher mit der Klemmeinrichtung 30 gekoppelt sein. Beispielsweise kann in dem einfachsten Fall die Klemmschraube gegen unerwünschtes Lockern oder Lösen von der Klemmeinrichtung 30 eine Verstemmung oder einen Materialauftrag aufweisen. Durch diese Sicherung kann erreicht werden, dass beim Öffnen der Klemmeinrichtung 30 eine maximale Öffnungsweite vorgegeben wird und sich die Klemmeinrichtung nicht ungewünscht von der Anschlussdose 1 beim Öffnen lösen kann.

Ferner kann gemäß der dargestellten Ausführungsform ein Federmittel 48 vorgesehen werden, dass dem Klemmmittel bzw. der Klemmschraube 40 entgegenwirkt. Durch das Federmittel 48 wird die Klemmeinrichtung 30 nach außen gedrückt, wodurch ermöglicht wird, dass die Klemmeinrichtung 30 immer in der maximalen durch die Klemmschraube 40 definierten Position steht. Dadurch soll gewährleistet werden, dass kein Spiel in dem System ist und dass die Klemmeinrichtung 30 für die Datenkabel 60 Einführung in der maximal geöffneten Stellung bleibt. Dadurch soll es nicht zu einem "Verhaken" des Datenkabels 60 bei der Montage mit der Klemmeinrichtung 30 kommen.

Das Federmittel 48 kann gemäß den Figuren 4 und 6 durch eine Druckfeder gebildet werden, die koaxial zu der Klemmschraube 40 angeordnet ist. Zur besseren Lagerung der Druckfeder kann an dem Gehäuseunterteilboden 24 bzw. dessen Außenseite 12 und/oder an der dem Gehäuseunterteilboden 24 zugewandten Seite der Klemmeinrichtung 30 eine dornförmige Federlagerung sein.

Das Gehäuseunterteil 20 weist eine erste Auflagefläche 21 für das mindestens eine Datenkabel 60 und eine zweite Auflagefläche 22 für das mindestens eine Datenkabel 60 auf, siehe Figur 4.

Die erste Auflagefläche 21 und die zweite Auflagefläche 22 sind auf gegenüberliegenden Seiten der Gehäuseunterteilöffnung 23 angeordnet. Bevorzugt sind die erste Auflagefläche 21 und die zweite Auflagefläche 22 auf gegenüberliegenden Seiten der Gehäuseunterteilöffnung 23 angeordnet, wobei eine gedachte Verbindungslinie zwischen den zwei Auflageflächen 21, 22 eine zweite gedachte Verbindungslinie zwischen den zwei Schienenführungen 25 - bevorzugt näherungsweise - in einem rechten Winkel schneidet.

Das mindestens eine Datenkabel 60 kann wahlweise an der ersten Auflagefläche 21 oder an der zweiten Auflagefläche 22 durch die Klemmvorrichtung 30 klemmend fixiert werden, wobei die erste Auflagefläche 21 und die zweite Auflagefläche 22 in einem Winkel ungleich 0° zueinander angeordnet sind, siehe Figuren 3 und 6. Je nachdem, ob das mindestens eine Datenkabel 60a an der ersten Auflagefläche 21 oder an der zweiten Auflagefläche 22 fixiert angeordnet ist, ergeben sich zwei unterschiedliche Kabelabgangsrichtungen. Der Winkel α kann insbesondere zwischen 110° und 150°, vorzugsweise zwischen 130° und 140°, besonders bevorzugt etwa 140°, betragen, gemessen zwischen den beiden Auflageflächen 21, 22.

Die erste Auflagefläche 21 kann parallel zu dem Gehäuseunterteilboden 24 des Gehäuseunterteils 20 bzw. der Rückseite 15 des Gehäuses 10 angeordnet sein.

Die zweite Auflagefläche 22 ist gegen den Gehäuseunterteilboden 24 des Gehäuseunterteils 20 bzw. der Rückseite 15 des Gehäuses 10 in einem Winkel β geneigt angeordnet, wobei der Winkel β insbesondere zwischen 20° und 70°, vorzugsweise zwischen 40° und 50°, besonders bevorzugt etwa 45°, beträgt, wobei der spitze Winkel β zwischen der zweiten Auflagefläche 22 und dem Gehäuseunterteilboden 24 als die Neigung der zweiten Auflagefläche 22 gegen den Gehäuseunterteilboden 24 angesehen wird. Die Auflagefläche 22 kann beispielsweise an einem entsprechend geformten Vorsprung, der an der Außenseite 12 des Gehäuseunterteilbodens 24 angeordnet ist, ausgebildet sein.

Die Klemmvorrichtung 30 kann ebenfalls eine erste und eine zweite Auflagefläche 31, 32 aufweisen, die etwa parallel zu der entsprechenden Auflagefläche 21, 22 angeordnet sind. Demnach korrespondieren die Auflageflächen 21 und 31 sowie die Auflageflächen 22 und 32 und sind eingerichtet, beim Verklemmen des Datenkabels 60 zusammenzuwirken. Das mindestens eine Datenkabel 60 kann somit zwischen den Auflageflächen 31, 32 der Klemmvorrichtung 30 und der entsprechenden Auflagefläche 21, 22 klemmend fixiert werden.

Die jeweilige Auflagefläche 21 und/oder 22 und/oder 31 und/oder 32 kann eine Anlagekontur beispielsweise in Form einer Rinne für das mindestens eine Datenkabel 60 oder auch in Form von zwei insbesondere etwa parallel verlaufenden Rinnen für die beiden Datenkabel 60 aufweisen. Die Anlagekontur kann einerseits die Positionierung des oder der Datenkabel 60 erleichtern. Andererseits kann die Anlagekontur die Richtung, in welcher das oder die Datenkabel 60 auf der Rückseite 15 von dem Gehäuse 10 weggeführt werden, das heißt die Richtung des Kabelabgangs, definieren.

Vorzugsweise ist die Anlagekontur derart ausgebildet, dass bei Anlage des Datenkabels 60 an die ersten Auflageflächen 21, 31 die Rinne der Klemmvorrichtung 30 und die Rinne der ersten Auflageflächen 21, 31 das zu fixierende Datenkabel 60 nahezu vollständig umschließen und entsprechend bei Anlage des Datenkabel 60 an die zweite Auflagefläche 22 die Rinne der Klemmvorrichtung 30 und die Rinne der zweiten Auflagefläche 22, 32 das zu fixierende Kabel 50 ebenso nahezu vollständig umschlie-ßen.

### Bezugszeichenliste

- 1: Anschlussdose
- 10: Gehäuse
- 11: Innenseite
- 12: Außenseite
- 14: Vorderseite
- 15: Rückseite
- 20: Gehäuseunterteil
- 21: erste Auflagefläche
- 22: zweite Auflagefläche
- 23: Gehäuseunterteilöffnung
- 23a: erster Abschnitt
- 23b: zweiter Abschnitt
- 24: Gehäuseunterteilboden
- 24a: Steg
- 24b: Durchbruch
- 25: Schienenführung
- 27: Führungsnut
- 28: Hinterschneidungsbereich
- 29: Verliersicherung
- 30: Klemmvorrichtung
- 31: erste Auflagefläche
- 32: zweite Auflagefläche
- 34: Gewinde
- 36: Führung
- 40: Klemmschraube
- 42: Schraubenkopf
- 44: Gewindeabschnitt
- 48: Federmittel
- 50: Gehäuseoberteil
- 52: Leiterplatte
- 54: Steckbuchse
- 60: Kabel

- A: Gehäusemittelachse

## Patentansprüche

1. Anschlussdose (1), insbesondere Unterputz- oder Hohlwandanschlussdose, für mindestens ein Datenkabel (60) eines Daten- und/oder Kommunikationsnetzwerks, aufweisend
- ein Gehäuse (10) mit einer Innenseite (11), einer Außenseite (12), einem Gehäuseunterteil (20) und einem Gehäuseoberteil (50), wobei das Gehäuseoberteil (50) auf das Gehäuseunterteil (20) in einer Gehäusemittelachse (A) aufsetzbar ist,
- wobei an dem Gehäuseunterteil (20) an einem Gehäuseunterteilboden (24) eine Gehäuseunterteilöffnung (23) und eine Klemmeinrichtung (30) und ein Klemmmittel vorgesehen sind,
- wobei die Klemmeinrichtung (30) an einer Außenseite (12) des Gehäuseunterteilbodens (24) angeordnet ist und durch das Klemmmittel zum Festklemmen des mindestens eines Datenkabels (60) zwischen zwei Auflageflächen (21, 31, 22, 32) vorgesehen ist,
- wobei durch die Gehäuseunterteilöffnung (23) das mindestens eine Datenkabel (60) durch den Gehäuseunterteilboden (24) in das Gehäuse (10) hineinragen kann,
- wobei in dem Gehäuse (10) eine Leiterplatte (52) angeordnet ist, an welcher mindestens eine Steckbuchse (54) zur Aufnahme eines Steckverbinders angeordnet ist,
- wobei die Klemmeinrichtung (30) durch mindestens eine Schienenführung (25) entlang der Gehäusemittelachse (A) verschiebbar ist.

2. Anschlussdose (1) nach einem der vorgenannten Ansprüche, **dadurch gekennzeichnet, dass** das Klemmmittel die Klemmeinrichtung (30) und das Gehäuseunterteil (20) verbindet und dass das Klemmmittel von einer Innenseite (11) des Gehäuses (10) betätigbar ist.

3. Anschlussdose (1) nach einem der vorgenannten Ansprüche, **dadurch gekennzeichnet, dass** das Klemmmittel verliersicher mit der Klemmeinrichtung (30) gekoppelt ist.

4. Anschlussdose (1) nach einem der vorgenannten Ansprüche, **dadurch gekennzeichnet, dass** das Klemmmittel eine Klemmschraube (40) umfasst.

5. Anschlussdose (1) nach einem der vorgenannten Ansprüche, **dadurch gekennzeichnet, dass** die Klemmeinrichtung (30) durch die mindestens eine Schienenführung (25) parallel zu dem Gehäuseboden gehalten entlang der Gehäusemittelachse (A) verschiebbar ist.

6. Anschlussdose (1) nach einem der vorgenannten Ansprüche, **dadurch gekennzeichnet, dass** die Schienenführung (25) eine, vorzugsweise U-förmige, Führungsschiene umfasst

7. Anschlussdose (1) nach einem der vorgenannten Ansprüche, **dadurch gekennzeichnet, dass** in einer Ebene senkrecht zu der Gehäusemittelachse (A) die mindestens eine Schienenführung (25) und die Klemmeinrichtung (20) durch einen Formschluss verbunden sind.

8. Anschlussdose (1) nach einem der vorgenannten Ansprüche, **dadurch gekennzeichnet, dass** die Schienenführung (25) die Klemmeinrichtung (30) entlang der Gehäusemittelachse (A) über der Gehäuseunterteilöffnung (23) hält.

9. Anschlussdose (1) nach einem der vorgenannten Ansprüche, **dadurch gekennzeichnet, dass** die Klemmeinrichtung (30) derart bemessen ist, dass diese die Gehäuseunterteilöffnung (23) vollständig überragt.

10. Anschlussdose (1) nach einem der vorgenannten Ansprüche, **dadurch gekennzeichnet, dass** die Klemmeinrichtung (30) durch zwei Schienenführungen in der Gehäusemittelachse (A) verschiebbar ist.

11. Anschlussdose (1) nach einem der vorgenannten Ansprüche, **dadurch gekennzeichnet, dass** die zwei Schienenführungen (25) auf gegenüberliegenden Seiten der Gehäuseunterteilöffnung (23) angeordnet sind, und dass die Klemmeinrichtung (30) zwischen den zwei Schienenführungen (25) beweglich gehalten ist.

12. Anschlussdose (1) nach einem der vorgenannten Ansprüche, **dadurch gekennzeichnet, dass** die mindestens eine Schienenführung (25) eine Verliersicherung (29) umfasst.

13. Anschlussdose (1) nach einem der vorgenannten Ansprüche, **dadurch gekennzeichnet, dass** die Verliersicherung (29) durch eine Verstemmung oder Umbördelung gebildet ist.

14. Anschlussdose (1) nach einem der vorgenannten Ansprüche, **dadurch gekennzeichnet, dass** ein Federmittel (48) vorgesehen ist, dass dem Klemmmittel entgegen wirken kann.

15. Anschlussdose (1) nach einem der vorgenannten Ansprüche, **dadurch gekennzeichnet, dass** das Federmittel (48) das Klemmmittel entlang der Gehäusemittelache (A) abschnittsweise umgibt.

16. Anschlussdose (1) nach einem der vorgenannten Ansprüche, **dadurch gekennzeichnet, dass** an dem Gehäuseunterteil (20) und/oder an der Klemmeinrichtung (30) eine erste Auflagefläche (21, 31) für das mindestens eine Kabel (60) und eine zweite Auflagefläche (22, 32) für das mindestens eine Kabel (60) vorgesehen sind, dass das mindestens eine Kabel (60) wahlweise an der ersten Auflagefläche (21, 31) oder der zweiten Auflagefläche (22, 32) durch die Klemmvorrichtung (30) klemmend fixierbar ist, und dass die erste Auflagefläche (21,31) und die zweite Auflagefläche (22, 32) in einem Winkel (α) zueinander angeordnet sind.

17. Anschlussdose (1) nach einem der vorgenannten Ansprüche, **dadurch gekennzeichnet, dass** die erste Auflagefläche (21, 31) parallel zu dem Gehäuseunterteilboden (24) des Gehäuseunterteils (20) angeordnet ist.

18. Anschlussdose nach einem der vorhergehenden Ansprüche, **dadurch gekennzeichnet, dass** die zweite Auflagefläche (22, 32) gegen den Gehäuseunterteilboden (24) des Gehäuseunterteils in einem Winkel (β) zwischen 20° und 70°, vorzugsweise in einem Winkel (β) zwischen 40° und 50°, besonders bevorzugt in einem Winkel (β) von etwa 45°, geneigt angeordnet ist.

19. Anschlussdose (1) nach einem der vorhergehenden Ansprüche,
**dadurch gekennzeichnet, dass** die erste Auflagefläche (21) und die zweite Auflagefläche (22) auf gegenüberliegenden Seiten der Gehäuseunterteilöffnung (23) angeordnet sind.

20. Anschlussdose (1)nach einem der vorhergehenden Ansprüche,
**dadurch gekennzeichnet, dass** das Gehäuseoberteil (50) auf das Gehäuseunterteil (20) aufsetzbar ist und an dem Gehäuseunterteil (20) in mindestens vier, vorzugsweise mindestens sechs, besonders bevorzugt in acht, gegeneinander um die gedachte Gehäusemittelachse (A) gedrehten Stellungen festlegbar ist.
